# EUROPEAN PATENT SPECIFICATION

(11) **EP 1 819 591 B1**
(45) Date of publication and mention of the grant of the patent: **10.09.2008**
(21) Application number: 05818358.3
(22) Date of filing: 08.12.2005
(51) Int. Cl.: B64C 1/00, B64C 1/06, B64C 1/18, B64C 3/18, B64B 1/08

(54) **A TRUSSED STRUCTURE**
FACHWERKKONSTRUKTION
STRUCTURE ARMEE

(30) Priority: 08.12.2004 GB 0426944
(43) Date of publication of application: 22.08.2007
(73) Proprietor: Airbus UK Limited, Bristol, BS99 7AR (GB)
(72) Inventor: KAYE, Allan, Bristol BS16 6H F (GB)
(74) Representative: Denness, James Edward
(86) International application number: PCT/GB2005/004710
(87) International publication number: WO 2006/061617

(56) References cited:
- DE-A1- 19 613 090
- US-A- 1 908 757
- US-A- 5 644 888
- US-A- 5 704 185

## Description

The invention relates to a trussed structure, in particular, a trussed structure of the type used in aircraft, for example, in wing ribs and floor beams, and to a process of making a trussed structure.

Trussed structures, that is, structures comprising an outer frame supported by struts, are structurally strong whilst also being lightweight, and have found application in the aerospace, marine and civil engineering industries. Wooden trussed roof structures in residential homes and metal trussed roof structures in industrial buildings are examples of trussed structures.

US 1,908,757 discloses a metal trussed structure for use in an aircraft wing. The structure comprises a frame and struts in which the frame includes slots into which flattened ends of the struts are fixed. DE 196 13 090A and US 5,704,185 each disclose trussed composite structures in which the sockets for the struts are non-integral with the frame. US 5,644,888 discloses a composite material framework comprising thick walled I-beam members and cross members which engage into the channels of the I-beams. The framework is for use in structures such as bridges.

Composite materials such as carbon fibre composites offer a saving in weight as compared to metal, but the increased cost has limited the use of composite materials to applications where weight saving is of particular importance, for example in aircraft. Trussed rib structures in aircraft wings are conventionally made by attaching the struts directly to the wing skin(which acts as an outer frame) using metal fittings.

Those metal fittings can reduce or eliminate the weight advantage gained in using the composite material. Such trussed structures having metal fittings also suffer from the disadvantages associated with the dissimilar materials having different coefficients of thermal expansion and from galvanic corrosion between the metal and carbon fibre.

The invention provides a trussed structure for use in an aircraft comprising a frame and at least one strut, wherein the frame is of composite material and includes sockets for the struts which are integral with the frame.

The term "sockets" as used herein is to be understood as referring broadly to portions of the frame which overlap and accommodate the struts. As explained below, the frame may be co-cured or co-bonded with the struts in which case the material of the frame may be as one with the material of the struts. The portions of the frame which overlap and accommodate the struts are sockets as defined herein.

In contrast to conventional aircraft wing rib trussed structures, the trussed structure of the invention does not use the wing skin as a frame but has instead its own integral frame. The sockets are integral with the frame, that is, they are made as one piece with the frame and therefore there is no need for any separate socket fixings to be attached to the frame, making the assembly of the structure of the invention simpler and also making possible a reduction in weight, as compared to known structures having metal fittings. The frame will, in general, comprise one or more members which extend around the periphery of the structure.

In a preferred embodiment, the frame consists of a single member which extends around the periphery of the trussed structure and defines a central opening, across which the strut or struts extend.

The frame will typically comprise one or more pairs of opposed sockets, into which the strut or struts fit. The frame will be of composite material, preferably a composite material comprising a reinforcing fibre such as carbon or glass fibre. Preferably, the frame comprises carbon fibre. The matrix material may be thermosetting or thermoplastic but is preferably a thermosetting material - for example, an epoxy resin.

Preferably, at least part of the reinforcing fibre assembly of the sockets will be continuous with the reinforcing fibre assembly of the frame, that is, at least some of the fibres defining the socket portions are woven into the fibres of the rest of the frame. Preferably, at least part of the reinforcing fibre assembly of the socket is formed of the reinforcing fibre assembly of the frame. The matrix material of the frame is preferably formed as one piece in a single step, with no discontinuities or welds.

The trussed structure will typically include a plurality of struts, for example, five or more struts. Generally, the struts will be of tubular form and of circular cross-section preferably having a diameter in the range of from 10mm to 30mm, although structures having other forms of strut are within the scope of the invention. Preferably, the struts will be of composite material, more preferably a carbon fibre composite material. The matrix material of the struts may be thermosetting or thermoplastic, but is preferably a thermosetting material such as an epoxy resin. Preferably, both the frame and the struts are of carbon composite material.

The struts may be formed, for example, by extending a braided fibre sock over a cylindrical mandrel and impregnating the sock with a resin or, more preferably, by winding the fibre onto a cylindrical mandrel. The fibre may be pre-impregnated with resin or the resin may be infused after winding. After curing the mandrel is removed to leave tubes of composite material which are cut to the desired length. Alternatively, then struts may be co-cured with the frame, as described below.

The frame preferably comprises a series of plies of fibre material in which the fibres of each ply extend in a predetermined orientation with respect to the fibres on the other plies. For example, the frame may comprise four plies laid at 0°, +45°, -45° and 90°. The frame may comprise one or more additional plies in the regions of the sockets to provide additional strength in those regions or, alternatively, the frame may comprise one or more additional plies in the regions between the sockets to provide extra strength in those regions, for example, to reinforce regions of a wing rib frame where the frame is fastened to the wing skin.

Conventionally, composite trussed structures for aircraft are made by laying up the desired number of plies of shaped fibre material at the desired orientations with respect to each other in a moulding tool, compressing the fibre material, if desired, under a vacuum, closing the moulding tool, injecting the resin into the tool and curing the resin. The strut is then released from the tool, drilled and machine-finished. Finally, the struts are then assembled into position using metallic attachment fittings and bolted fasteners.

In one embodiment of the invention, the trussed structure is prepared by laying out at least one fibre ply in a moulding tool, placing mandrels on the at least one fibre ply in the desired locations and laying out at least one further fibre ply over the mandrels to make a fibre structure having socket portions around the mandrels. If desired, the fibre plies may then be stitched together around the socket portions for added strength. The moulding tool is then closed and a resin matrix is injected and cured in the conventional manner, prior to releasing the cured frame from the tool. The mandrels are then removed to open up the sockets and the frame is then drilled and finished as necessary before the at least one strut is inserted into the sockets and fixed in place, preferably with an adhesive. Where an adhesive is used to fix the strut or struts in the sockets, the mandrels used will be slightly larger than the at least one strut in order to provide space for the adhesive between the outer surface of the strut and the inner surface of the socket.

In a favoured embodiment, instead of using mandrels to form the sockets and inserting the at least one strut into the sockets of the cured frame, cured strut or struts are laid in place within the fibre assembly of the frame as it lies in the moulding tool, the tool is closed, resin is infused into the frame and cured. The resin of the frame cures around the portions of each strut which are received within the sockets of the frame, ensuring an intimate contact and a correspondingly strong bond between the at least one strut and the frame. That process in which the resin of the frame is cured around a previously cured strut is referred to herein as "co-bonding" of the frame and strut.

In an especially preferred embodiment the fibre material of the strut is supported on a mandrel, a matrix material is infused, if necessary, into the fibre material of the strut and the assembly of mandrel, fibre and uncured matrix material is assembled together with the fibre assembly of the frame in the frame moulding tool. Resin is infused around the fibre assembly of the frame and cured together with the resin of the struts, thereby forming an especially strong bond. The cured frame and struts are then released from the moulding tool and the mandrels removed from the interior of the struts. That process is referred to herein as "co-curing" of the frame and struts. It is also envisaged that the matrix material of the struts could be introduced together with the matrix material of the frame rather than being applied before the strut assembly is introduced with the tool.

As has been described above, the fibre reinforcement of the frame may take the form of one or more plies of fibre material. Preferably, however, the fibres of the frame are in the form of a three-dimensional (3D) woven structure. Such 3D structures are known for applications including bridge structures, automotive components and aircraft propeller blades. 3D-weaving, as referred to herein, is where a variable cross-section is created from the weaving process by simultaneous multiple insertions from one or both sides of the fabric. Methods of 3D weaving are described in US 5,085,252 and in the documents referred to therein.

3D-weaving is capable of producing straight from the loom the fibre structure of the frame as a 3D assembly which includes socket portions. In such 3D-woven structures fibres run up and down through the structure and so additional stitching in the regions of the sockets will not, in general, be required although such extra stitching may, of course, be included if desired.

Once the 3D fibre structure of the frame has been woven, it may be placed into the moulding tool, mandrels or struts may be inserted into the socket portions and resin introduced and cured as described above in respect of frames comprising fibre plies.

As mentioned above, the trussed structure of the invention is especially suitable for use in aircraft. For example, the trussed structure may be a rib for a wing or tail section or a floor beam in an aircraft.

The invention also provides an aircraft comprising a trussed structure according to the invention. The trussed structure may be a floor beam. The trussed structure may be a rib.

The invention also provides a process of making a trussed structure for use in an aircraft comprising the steps of forming a fibre assembly comprising socket portions and introducing a matrix material into the fibre assembly to create a frame having integral sockets.

The fibre material which forms the socket portions will be connected, at least in part, with the adjacent fibre material of the rest of the fibre assembly. Preferably, at least part of the fibre material defining the socket portions is continuous with the fibre material of the adjacent non-socket portion of the fibre assembly. The fibre material of the socket portions may be stitched onto the fibre material of the non-socket portions of the fibre assembly. When the fibre assembly comprises multiple plies, the plies of the socket portions may be interleaved with the plies of the non-socket portions of the fibre assembly.

Advantageously, the matrix material is a thermosetting resin which is cured after being introduced into the fibre assembly.

In one embodiment, the matrix material is introduced into the fibre assembly of the frame to prepare the frame as a first step and the struts are fixed or formed in the sockets.in a subsequent step.

As mentioned above, mandrels may be inserted into the socket portions of the fibre assembly before the introduction of the matrix material and removed after the matrix material has been hardened to leave the sockets as open recesses in the frame into which the struts can be inserted. Thus, in one embodiment, the socket portions of the frame are occupied by mandrels during the introduction of the matrix material into the fibre assembly and during any curing of the matrix material, the mandrels are subsequently removed, and struts are introduced into the sockets and are fixed in place with adhesive. At least one of the sockets which accommodate each particular strut must be open at both ends in order to allow the strut to be slid through and into the other socket.

Alternatively, at least one strut may be present in the socket portions of the fibre assembly during the step of introducing the matrix material. Preferably, the struts are of thermosetting composite material and are fully cured before being introduced into the socket portions of the fibre assembly, thereby resulting in co-bonding of the frame and struts. More preferably, at least one assembly of fibre and uncured matrix material supported on a mandrel is introduced into the socket portions of the fibre assembly and the at least one assembly and the frame are co-cured. The at least one mandrel is then removed after curing.

Embodiments of the invention will now be described for the purpose of illustration only with reference to the figures in which:
Fig. i shows an embodiment of a simple wing rib trussed structure according to the invention;
Figs. 2a to e show steps in a method of making a frame for use in a trussed structure according to the invention;
Fig. 3 shows a 3D-woven fibre structure for use in a frame for a trussed structure according to the invention; and
Fig. 4 shows the fibre structure of Fig. 3 laid up in a moulding tool with three struts in place and a fourth strut in alignment, ready for insertion into the socket portions of the fibre structure.

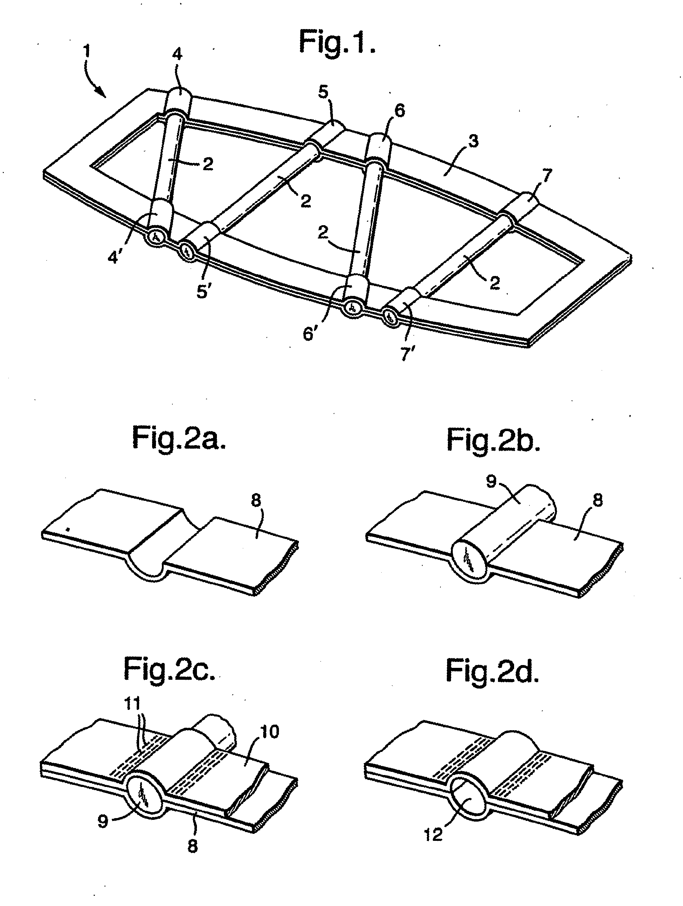

Fig. 1 shows a trussed structure according to the invention for use as a wing rib in an aircraft. The trussed structure 1 comprises four tubular struts 2 and a frame 3 of generally rectangular shape with the two long sides being bowed outwards somewhat.

The frame 3 comprises eight sockets 4, 4', 5, 5', 6, 6' and 7, 7', arranged in four opposing pairs, each opposing pair of sockets holding the two end portions of one of the struts 2.

The sockets 4, 4', 5, 5', 6, 6' and 7, 7', are integral with the frame, that is, they are formed of the composite material of the frame where that material extends around the end portions of the struts.

Figs. 2a to e show steps in one method of making a frame for a trussed structure according to the invention. Fig. 2a shows a partial view of a carbon fibre ply 8 which is a cut shape for use in a wing rib, laid up in a moulding tool (not shown). The moulding tool has a groove of semi-circular cross-section running transverse to the length of the carbon fibre ply 8. That carbon fibre ply 8 has been forced into the groove so that it conforms to the shape of the groove. As shown in Fig. 2b, a cylindrical mandrel 9 is then placed in the groove on top of the first ply 8. The mandrel 9 has a radius substantially equal to the radius of the groove minus the thickness of the first ply 8 so that it fits snugly into the depression in the carbon fibre ply 8 where it conforms to the groove. The mandrel 9 extends (not shown in Fig. 2b) across the moulding tool so that its other end lies in a similar groove on the other side of the fame, such that two aligned sockets are formed on opposite sides of the frame.

A second ply 10 of carbon fibre (shown in part in Fig. 2c) is then laid on top of the first ply 8 and over the mandrel 9. The second ply 10 is forced down so that it lies snugly over the mandrel 9, which is thereby sandwiched between the first ply 8 and the second ply 10.

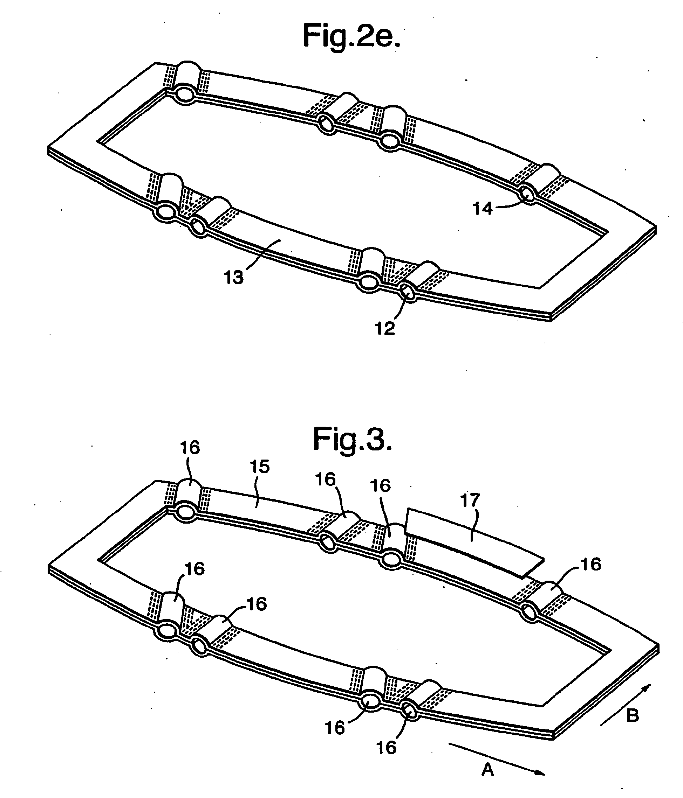

The first and second plies 8 and 10 are then stitched together on either side of the mandrel 9 for extra reinforcement with the stitches 11 being arranged in rows running parallel to the mandrel 9. The moulding tool is then closed, aerospace epoxy resin is infused into the carbon plies 8 and 10 and the resin is then cured. The cured frame is then released from the moulding tool and the mandrel 9 is withdrawn to leave the formed socket 12 as an open ended recess of constant circular cross-section extending transversely across the frame 13 of cured composite material. The full frame 13 is shown in Fig. 2e, without struts. As can be seen from Fig. 2e, the opposite side of the frame 13 from socket 12 includes an opposing socket 14 which was formed around the same mandrel 9 and is, in consequence, aligned with socket 12 for receiving a strut. The frame 13 can then be drilled and machined as required. Struts are then inserted into the sockets and fixed in place with adhesive to form the trussed structure.

In a variation of the method shown in Figs. 2a to e, cured struts are used in place of the mandrels 9. In that variation, the resin of the frame cures (co-bonds) around the end portions of each strut, thereby forming a strong bond with the strut. In a further variation, carbon fibre filament coated with uncured ("wet") resin is wound onto strut mandrels and the uncured carbon fibre/resin/mandrel assemblies are used in place of mandrels 9. In that variation, the resin of the strut is co-cured with the resin of the frame, thereby providing an especially strong bond. The strut mandrels are removed subsequently and the frame drilled and finished as before.

Fig. 3 shows a 3D-woven carbon fibre structure 15 which includes eight socket portions 16 arranged in four opposed pairs, which are woven as one with the rest of the structure 15. The warp and weft directions are indicated by arrows A and B respectively. If desired, additional plies 17 having a particular desired orientation may be added to the fibre structure 15 in the regions between sockets 16 (only one section of addition ply 17 is shown in Fig. 3 for clarity) to add strength in a particular direction.

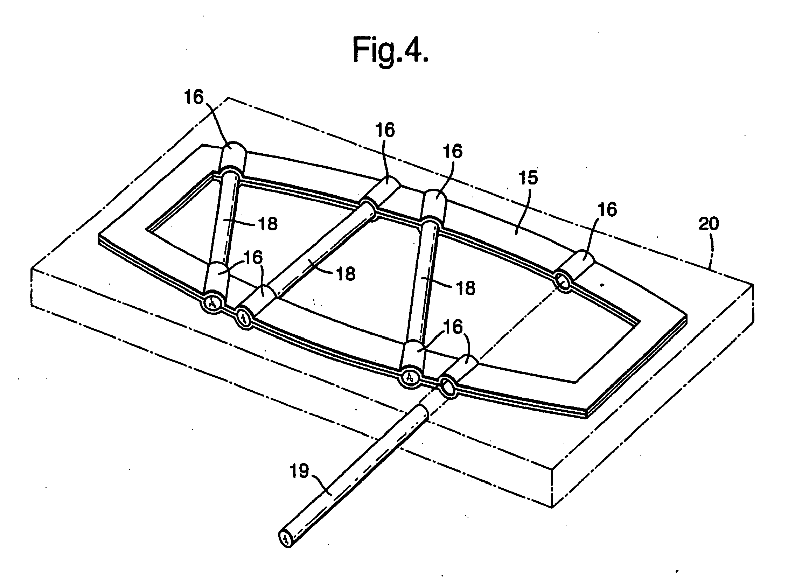

Fig. 4 shows the fibre structure 15 with three cured composite struts 18 in place in respective opposed pairs of socket portions 16 and a fourth strut 19 in alignment with the fourth pair of socket portions 16, ready to be inserted into those socket portions 16. The frame/strut assembly lies in an open moulding tool 20. When the last strut 19 is in place in socket portions 16, the moulding tool 20 is closed, resin is infused into the fibre structure 15 and cured, thereby co-bonding with the struts 18, 19.

While the present invention has been described and illustrated by reference to particular embodiments it will be appreciated by those of ordinary skill in the art that the invention lends itself to many variations not illustrated herein. For those reasons, reference should be made to the claims for purposes of determining the true scope of the present invention.

## Claims

1. A trussed structure (1) for use in an aircraft comprising a frame (3, 13) of composite material and at least one strut (2, 18), **characterised in that** the frame (3, 13) includes sockets (4, 4', 5, 5', 6, 6', 7, 7', 12, 16) which are integral with the frame (3, 13).

2. A trussed structure (1) as claimed in claim 1 in which the composite material comprises carbon fibre.

3. A trussed structure (1) as claimed in claim 1 or claim 2 in which the matrix of the composite material is a thermosetting material.

4. A trussed structure (1) as claimed in any of claims 1 to 3 in which the at least one strut (2) is of composite material and has been co-cured with the frame (3, 13).

5. A trussed structure (1) as claimed in any of claims 1 to 3 in which the at least one strut (18, 19) is of composite material and has been co-bonded with the frame.

6. A trussed structure (1) as claimed in any of claims 1 to 3 in which the at least one strut (2) is fixed in the sockets (4, 4', 5, 5', 6, 6', 7, 7', 12) with adhesive.

7. A trussed structure (1) as claimed in any of claims 1 to 6 in which the frame (3, 13) is a 3D-woven structure.

8. A trussed structure (1) as claimed in any of claims 1 to 7 in which the frame (3, 13) comprises stitching in the region of at least one of the sockets (4, 4', 5, 5', 6, 6', 7, 7', 12, 16).

9. A trussed structure (1) as claimed in any of claims 1 to 8 which comprises a series of plies (8, 10) of fibres.

10. A trussed structure (1) according to any of claims 1 to 9 which is a rib or a floor beam for an aircraft.

11. An aircraft comprising a trussed structure (1) according to any of claims 1 to 10.

12. A process of making a trussed structure for use in an aircraft, the trussed structure comprising a frame (3, 13) having integral sockets (4, 4', 5, 5', 6, 6', 7, 7', 12, 16) and at least one strut (2, 18), and the process comprising the steps of forming a fibre assembly comprising socket portions and introducing a matrix material into the fibre assembly to create the frame.

13. A process as claimed in claim 12 in which the matrix material is a thermosetting resin and, after introduction into the fibre assembly, is cured.

14. A process as claimed in claim 13 in which at least one strut (18, 19) is present in the socket portions of the frame during the step of curing the resin.

15. A process claimed in claim 14 in which the at least one strut is (18, 19) of thermosetting composite material and is fully cured before being introduced into the socket portions (16).

16. A process as claimed in claim 14 in which at least one assembly comprising fibre, uncured resin and a mandrel (9) is introduced into the socket portions of the fibre assembly and the at least one strut assembly and the frame are co-cured.

17. A process as claimed in claim 12 or claim 13 in which the socket portions of the frame are occupied by mandrels (9) during the introduction of the matrix material into the fibre assembly and during any curing of the matrix material, the mandrels are subsequently removed, struts are introduced into the sockets and are fixed in place with adhesive.

## Patentansprüche

1. Fachwerkkonstruktion (1) für eine Verwendung in einem Flugzeug, umfassend einen Rahmen (3, 13) aus einem Verbundmaterial und mindestens eine Strebe (2, 18), **dadurch gekennzeichnet, dass** der Rahmen (3, 13) Steckhülsen (4, 4', 5, 5', 6, 6', 7, 7', 12, 16) umfasst, welche einteilig mit dem Rahmen (3, 13) ausgebildet sind.

2. Fachwerkkonstruktion (1) nach Anspruch 1, bei welcher das Verbundmaterial eine Kunststofffaser umfasst.

3. Fachwerkkonstruktion (1) nach Anspruch 1 oder 2, bei welcher die Matrix des Verbundmaterials ein wärmehärtendes Material ist.

4. Fachwerkkonstruktion (1) nach einem der Ansprüche 1 bis 3, bei welcher die mindestens eine Strebe (2) aus einem Verbundmaterial ist und zusammen mit dem Rahmen (3, 13) ausgehärtet wurde.

5. Fachwerkkonstruktion (1) nach einem der Ansprüche 1 bis 3, bei welcher die mindestens eine Strebe (18, 19) aus einem Verbundmaterial ist und zusammen mit dem Rahmen plattiert wurde.

6. Fachwerkkonstruktion (1) nach einem der Ansprüche 1 bis 3, bei welcher die mindestens eine Strebe (2) mit einem Klebstoff in den Steckhülsen (4, 4', 5, 5', 6, 6', 7, 7', 12) befestigt ist.

7. Fachwerkkonstruktion (1) nach einem der Ansprüche 1 bis 6, bei welcher der Rahmen (3, 13) eine 3D-gewebte Struktur ist.

8. Fachwerkkonstruktion (1) nach einem der Ansprüche 1 bis 7, bei welcher der Rahmen (3, 13) in dem Bereich mindestens einer der Steckhülsen (4, 4', 5, 5', 6, 6', 7, 7', 12, 16) eine Naht umfasst.

9. Fachwerkkonstruktion (1) nach einem der Ansprüche 1 bis 8, welche eine Folge von Stofflagen (8, 10) aus Fasern umfasst.

10. Fachwerkkonstruktion (1) gemäß einem der Ansprüche 1 bis 9, welche ein Spant oder ein Bodenträger für ein Flugzeug ist.

11. Flugzeug umfassend eine Fachwerkkonstruktion (1) gemäß einem der Ansprüche 1 bis 10.

12. Verfahren zum Herstellen einer Fachwerkkonstruktion für eine Verwendung in einem Flugzeug, wobei die Fachwerkkonstruktion einen Rahmen (3, 13), welcher einteilig ausgebildete Steckhülsen (4, 4', 5, 5', 6, 6', 7, 7', 12, 16) hat, und mindestens eine Strebe (2, 18) umfasst, und wobei das Verfahren die Schritte umfasst:
Formen eines Faserstoff-Bauteils, welches Steckhülsenteile umfasst, und
Einbringen eines Matrixmaterials in das Faserstoff-Bauteil zum Bilden des Rahmens.

13. Verfahren nach Anspruch 12, bei welchem das Matrixmaterial ein wärmehärtendes Harz ist und, nach dem Einbringen in das Faserstoff-Bauteil, ausgehärtet wird.

14. Verfahren nach Anspruch 13, bei welchem während des Schritts des Aushärtens des Harzes mindestens eine Strebe (18, 19) in den Steckhülsenteilen des Rahmens angeordnet ist.

15. Verfahren nach Anspruch 14, bei welchem die mindestens eine Strebe (18, 19) aus einem wärmehärtenden Verbundmaterial ist und vollständig ausgehärtet ist, bevor sie in die Steckhülsenteile (16) eingebracht wird.

16. Verfahren nach Anspruch 14, bei welchem mindestens ein Bauteil, umfassend Faserstoff, nicht-ausgehärtetes Harz und einen Dorn (9), in die Steckhülsenteile des Faserstoff-Bauteils eingebracht wird und das mindestens eine Streben-Bauteil und der Rahmen zusammen ausgehärtet werden.

17. Verfahren nach Anspruch 12 oder 13, bei welchem die Steckhülsenteile des Rahmens während des Einbringens des Matrixmaterials in das Faserstoff-Bauteil und während des Aushärtens des Matrixmaterials mit Dornen (9) besetzt sind, die Dornen anschließend entfernt werden, die Streben in die Steckhülsen eingebracht werden und mit Klebstoff befestigt werden.

## Revendications

1. Structure renforcée (1) utilisable dans un aéronef, comprenant un cadre (3, 13) en matériau composite et au moins une entretoise (2, 18), **caractérisée e**n ce que le cadre (3, 13) comprend des cavités d'emboîtement (4, 4', 5, 5', 6, 6', 7, 7', 12, 16) d'un seul tenant avec le cadre (3,13).

2. Structure renforcée (1) selon la revendication 1, dans laquelle le matériau composite comprend des fibres de carbone.

3. Structure renforcée (1) selon l'une des revendications 1 et 2, dans laquelle la matrice de matériau composite est un matériau thermodurcissable.

4. Structure renforcée (1) selon l'une quelconque des revendications 1 à 3, dans laquelle l'au moins une entretoise (2) est en matériau composite et a été co-polymérisée avec le cadre (3, 13).

5. Structure renforcée (1) selon l'une quelconque des revendications 1 à 3, dans laquelle l'au moins une entretoise (18, 19) est en matériau composite et a été co-reliée au cadre.

6. Structure renforcée (1) selon l'une quelconque des revendications 1 à 3, dans laquelle l'au moins une entretoise (2) est fixée dans les cavités d'emboîtement (4, 4', 5, 5', 6, 6', 7, 7', 12) par un adhésif.

7. Structure renforcée (1) selon l'une quelconque des revendications 1 à 6, dans laquelle le cadre (3, 13) est une structure tissée tridimensionnelle.

8. Structure renforcée (1) selon l'une quelconque des revendications 1 à 7, dans laquelle le cadre (3, 13) comprend une couture dans la région d'au moins l'une des cavités d'emboîtement (4, 4', 5, 5', 6, 6', 7, 7', 12, 16).

9. Structure renforcée (1) selon l'une quelconque des revendications I à 8, comprenant une série de couches (8, 10) de fibres.

10. Structure renforcée (1) selon l'une quelconque des revendications 1 à 9, qui est une nervure ou une poutre de plancher pour un aéronef.

11. Aéronef comprenant une structure renforcée (1) selon l'une quelconque des revendications 1 à 10.

12. Procédé de fabrication d'une structure renforcée utilisable dans un aéronef, la structure renforcée comprenant un cadre (3, 13) ayant des cavités d'emboîtement intégrées (4, 4', 5, 5', 6, 6', 7, 7', 12, 16) et au moins une entretoise (2, 18), et le procédé comprenant les étapes consistant à former un assemblage de fibres comprenant des parties formant cavités d'emboîtement et à introduire un matériau de matrice dans l'assemblage de fibres pour créer le cadre.

13. Procédé selon la revendication 12, dans lequel le matériau de matrice est une résine thermodurcissable et, après introduction dans l'assemblage de fibres, il est thermo-durci.

14. Procédé selon la revendication 13, dans lequel au moins une entretoise (18, 19) est présente dans les parties formant cavités d'emboîtement du cadre pendant l'étape de thermo-durcissement de la résine.

15. Procédé selon la revendication 14, dans lequel l'au moins une entretoise (18, 19) est en matériau thermodurcissable et est entièrement polymérisée avant d'être introduit dans les parties formant cavités d'emboîtement (16).

16. Procédé selon la revendication 14, dans lequel au moins un assemblage comprenant des fibres, de la résine non polymérisée et un mandrin (9) est introduit dans les parties formant cavités d'emboîtement de l'assemblage de fibres et l'au moins un assemblage d'entretoises et le cadre sont co-polymérisés.

17. Procédé selon l'une des revendications 12 et 13, dans lequel les parties formant cavités d'emboîtement du cadre sont occupées par des mandrins (9) pendant l'introduction du matériau de matrice dans l'assemblage de fibres et pendant toute polymérisation du matériau de matrice, les mandrins sont ensuite enlevés, des entretoises sont introduites dans les cavités d'emboîtement et sont fixées en place par un adhésif.
